# EUROPÄISCHE PATENTSCHRIFT

(11) **EP 2 796 330 B1**
(45) Veröffentlichungstag und Bekanntmachung des Hinweises auf die Patenterteilung: **17.08.2016**
(21) Anmeldenummer: 14156919.4
(22) Anmeldetag: 27.02.2014
(51) Int. Cl.: B60T 7/22, B60W 30/08

(54) **Eigensicheres Fahrzeug**
Intrinsically safe vehicle
Véhicule à sécurité intrinsèque

(30) Priorität: 26.04.2013 DE 102013207685
(43) Veröffentlichungstag der Anmeldung: 29.10.2014
(73) Patentinhaber: ROBERT BOSCH GMBH, 70442 Stuttgart (DE)
(72) Erfinder: Heckel, Joerg, 71277 Rutesheim (DE)

(56) Entgegenhaltungen:
- WO-A1-2013/115246
- DE-A1- 3 824 637
- DE-A1- 10 345 748
- JP-A- 2005 309 657
- US-A1- 2005 121 925
- CONNELL J ET AL: "COOPERATIVE CONTROL OF A SEMI-AUTONOMOUS MOBILE ROBOT", PROCEEDINGS OF THE INTERNATIONAL CONFERENCE ON ROBOTICS AND AUTOMATION. CINCINNATI, MAY 13 - 18, 1990; [PROCEEDINGS OF THE INTERNATIONAL CONFERENCE ON ROBOTICS AND AUTOMATION], LOS ALAMITOS, IEEE COMP. SOC. PRESS, US, Bd. -, 13. Mai 1990 (1990-05-13), Seiten 1118-1121, XP000143720, DOI: 10.1109/ROBOT.1990.126145 ISBN: 978-0-8186-9061-7

## Beschreibung

### Stand der Technik

Die Erfindung geht aus einem eigensicheren Zustand beziehungsweise aus einem Überwachungszustand für Kraftfahrzeuge hervor, wobei der Zustand beziehungsweise der Modus die Überwachung einer möglichen Kollision eines Kraftfahrzeugs wie zum Beispiel einem Elektrofahrzeug oder einem Hybridfahrzeug mit Menschen betrifft. Gegenstand der vorliegenden Erfindung ist demnach ein Verfahren zur Begrenzung der Krafteinwirkung eines Elektro- oder Hybridfahrzeugs auf Menschen bei einem potentiellen Aufeinandertreffen zwischen dem Kraftfahrzeug und dem Menschen, insbesondere bei einem Übergang des Elektro- oder Hybridfahrzeugs zwischen einem sicheren und einem kritischen Fahrzeugzustand, wie beispielsweise einem Übergang des Elektro- oder Hybridfahrzeugs zwischen dem Stillstand des Fahrzeugs und einem Fahrzustand des Fahrzeugs oder einem Übergang des Elektro- oder Hybridfahrzeugs zwischen einem Fahrzustand des Fahrzeugs und dem Stillstand des Fahrzeugs.

Bekannterweise ist es seit bereits langer Zeit ein Ziel der Automobilhersteller, den Kraftstoffverbrauch von Kraftfahrzeugen weiter zu senken, um steigenden Preisen für fossile Kraftstoffe Rechnung zu tragen sowie sich mit dem Umweltschutz auseinanderzusetzen, insbesondere unter Berücksichtigung des umweltschädlichen Treibhauseffekts. Zur Senkung des Energieverbrauchs werden mittlerweile häufig sowohl Hybridfahrzeuge als auch reine Elektrofahrzeuge eingesetzt, dies nicht nur im gewerblichen Betrieb sondern vermehrt auch für Privathaushalte. Diese Fahrzeuge mit sogenannter alternativer Antriebstechnologie haben jedoch den Nachteil, dass sie im Fahrbetrieb durch einen elektrischen Antrieb wie zum Beispiel einen Elektromotor angetrieben werden, der in der Regel wenig bis keine Geräuschemissionen erzeugt. Durch diesen Mangel an Begleitgeräuschen im Fahrzustand des Elektro- oder Hybridfahrzeugs kann es passieren, dass Fußgänger oder Passanten das Fahrzeug nicht oder erst zu spät wahrnehmen, was zu einer unerwünschten Interaktion zwischen dem Passanten und dem Fahrzeug führen kann, wie zum Beispiel einem Aufeinanderprallen des Fahrzeugs mit dem Passanten, oder im schlimmsten Fall einer direkten Kollision zwischen dem Passanten und dem Fahrzeug. Des Weiteren ist es bei einer sehr langsamen Fahrt des Fahrzeugs, beispielsweise beim Einparken des Fahrzeugs in eine freie Parklücke, also dem Übergang des Fahrzeugs von einem langsamen Fahrzustand zu dem Stillstand des Fahrzeugs, durch die fehlende Geräuschkulisse aufgrund des geräuschlosen Fahrzeugantriebs für Passanten oft nicht möglich, die langsame Fahrbewegung des Fahrzeugs eindeutig als Bewegung wahrzunehmen, wodurch ein Stillstand des Fahrzeugs vermutet wird und sich der Passant womöglich unbedarft in den Bewegungsbereich und damit in die Gefahrenzone des Fahrzeugs begibt und es zu einem Aufprall zwischen Fahrzeug und Passant kommen kann. In einer derartigen Situation kann es daher zu einer direkten Kollision des Passanten mit dem Fahrzeug oder auch zu einem Einklemmen des Passanten zwischen dem einparkenden Fahrzeug und einem feststehenden Hindernis, wie zum Beispiel einem anderen parkenden Fahrzeug kommen. Speziell bei einem derartigen Fahrmanöver wie dem beschriebenen Einparken, oder auch bei anderen vergleichbaren Fahrmanövern, insbesondere bei einem langsamen Fahrzustand des Fahrzeugs oder bei einem Übergang des Fahrzeugs von einem Fahrzustand des Fahrzeugs in den Stillstand oder vice versa werden bereits jetzt und in baldiger Zukunft die Fahraufgaben der Kraftfahrzeuge zunehmend automatisiert, um den Fahrer zu entlasten und die Verkehrssicherheit zu erhöhen.

Automatische Fahrerassistenzsysteme mit Radar- und Videosensoren, die Fahrzeuge bei Fahrfehlern in einen sicheren Zustand, das heißt in der Regel zum Stillstand bringen, um Kollisionen mit anderem Fahrzeugen oder mit Passanten zu vermeiden, sind jedoch bereits bekannt und werden in naher Zukunft weiter Verbreitung finden. Beispielsweise ist aus der US 5,251,680 A eine Einrichtung für den Kollisionsschutz in Elektrofahrzeugen bekannt, die einen Hindernissensor und eine Steuereinrichtung umfasst, und bei der Hindernisse mit dem Hindernissensor detektiert und die detektierten Informationen an die Steuereinrichtung weitergegeben werden. Um gegebenenfalls einen Bremsvorgang einzuleiten, werden der Steuereinrichtung weitere Daten, wie der Lenkwinkel oder die Geschwindigkeit, bereitgestellt, und die Wahrscheinlichkeit einer Kollision bestimmt. Ist eine Kollisionswahrscheinlichkeit gegeben, wird der Bremsvorgang eingeleitet, um eine Kollision zu vermeiden. Ferner ist aus der DE 10 2010 056 187 A1 ein Verfahren zum Betrieb eines Fahrzeugs mit einer Antriebseinheit und einer Warnvorrichtung bekannt, die bei einer identifizierten sich anbahnenden Kollision des Fahrzeugs oder bei einer identifizierten Gefahrenbremsung des Fahrzeugs ein Warnsignal ausgibt. Das Warnsignal dient dementsprechend dazu, die Verkehrsteilnehmer, wie Fußgänger oder Radfahrer, im unmittelbaren Umfeld des Fahrzeugs vor einer bevorstehenden Kollision des Fahrzeugs frühzeitig zu warnen, damit sie ausweichen können.

Connel J et al: "Cooperative control of a semi-autonomous mobile robot", Proceedings of the International Conference on Robotics and Automation, Cincinnati, May 13 - 18, 1990; IEEE Comp. Soc. Press, US, Bd. -, 13. Mai 1990 beschreibt einen Roboter zur Personenbeförderung, der zur Erkennung von Kollisionen mit Hindernissen, wie etwa Personen, verschiedene, in Segmente unterteilte Stoßstangen ("bumper") aufweist. Beim Kontakt eines Hindernisses mit einer der Stoßstangen hält der Roboter an, oder bewegt sich rückwärts in eine dem Hinderniss entgegengesetzte Richtung.

DE 103 45 748 A1 beschreibt ein Verfahren zum Erkennen des Andockens von Fahrzeugen. Dabei werden Änderungen des Motordrehmoments und Änderungen der Raddrehzahl erfasst. Es wird geprüft, ob die Änderung des Motordrehmoments >0 und die Änderung der Raddrehzahl <0 ist. Trifft diese Bedingung zu, wird auf ein Andocken des Fahrzeugs geschlossen und das Fahrzeug kann abgebremst werden.

DE 38 24 637 A1 offenbart ein automatisches Bremssystem für Fahrzeuge, das bei langsamer Fahrt eine Kollision erkennt und eine automatische Bremswirkung auslöst. dazu weist das Fahrzeug eine schwenkbare Klappe auf, die bei einer Kollision ausgelenkt wird und einen Schalter betätigt, der automatisch die Bremsen anlegt.

Die bekannten Methoden umfassen demnach Kollisionsfrühwarnsysteme bzw. Kollisionsvermeidungssysteme, die dazu dienen, eine Kollision des Kraftfahrzeugs mit einem Hindernis, beispielsweise mit einem Passanten frühzeitig zu verhindern. Ein System, das bei einem bereits eintretenden Aufeinanderprallen eines Elektro- oder Hybridfahrzeugs mit einem Passanten einen Schaden des Passanten vermindert bzw. eine Interkation mit dem Passanten möglichst ohne größeren Schaden verlaufen lässt, sind bisher jedoch noch nicht bekannt oder noch nicht näher ausgereift. Speziell eine Automatisierung von Kraftfahrzeugen im gemischten Verkehr muss in naher Zukunft weiterentwickelt werden, um Menschen im Umfeld der Kraftfahrzeuge nicht unnötig zu gefährden. Insbesondere beim Anfahren oder bei geringer Fahrgeschwindigkeit im urbanen Umfeld führen Missverständnisse der Verkehrsteilnehmer oft noch zu gefährlichen Unfällen. Bisherige Umfeldsensoren haben noch große Lücken im Erfassungsbereich, das heißt im Bereich der Nahgrenze und bei der Oberflächenabdeckung der Fahrzeugaußenhaut. Der Übergang vom sicheren Fahrzeugzustand, also dem Stillstand des Fahrzeugs, hin zur normalen Fahrt, oder umgekehrt, kann mit heutigen Technologien noch nicht sicher für alle Beteiligten realisiert werden.

### Offenbarung der Erfindung

Das erfindungsgemäße Verfahren mit den Merkmalen des unabhängigen Anspruchs 1 hat gegenüber der Offenbarung des vorhergehend genannten Stands der Technik den Vorteil, dass eine unvorteilhafte Krafteinwirkung des Kraftfahrzeugs auf Menschen bei einem Aufeinandertreffen durch ein wirksames Zusammenspiel von Maßnahmen in der Fahrzeugkontrolle, wie zum Beispiel der Kontrolle des Triebstrangs oder des Bremssystems, und der Bewegungsplanung, beispielsweise durch das Umfelderfassungssystem, stark begrenzt oder sogar gänzlich verhindert werden kann. Das Kraftfahrzeug wird durch das erfindungsgemäße Verfahren kooperativ und ein gewünschter sorgloser Umgang zwischen Kraftfahrzeug und Passant kann realisiert werden. Das erfindungsgemäße Verfahren dient demnach zur Begrenzung der Krafteinwirkung eines Kraftfahrzeugs, insbesondere eines Elektro- oder Hybridfahrzeugs auf Menschen bei einem Aufeinandertreffen, und umfasst die Schritte des Aktivierens eines Überwachungsmodus des Kraftfahrzeugs, auch eigensicherer Modus oder eigensicherer Zustand des Fahrzeugs genannt, des Ermittelns eines Aufeinandertreffens zwischen Kraftfahrzeug und Mensch, des Erfassens einer Interaktionskraft des Kraftfahrzeugs mit einem Menschen außerhalb des Kraftfahrzeugs beim Aufeinandertreffen, und des Begrenzens der Krafteinwirkung des Kraftfahrzeugs auf den Menschen durch Steuern des Kraftfahrzeugs entgegen der erfassten Interaktionskraft, wobei der Schritt des Erfassens der Interaktionskraft des Kraftfahrzeugs mit dem Menschen ein Bestimmen einer Abweichung des Soll-Rollwiderstands des Kraftfahrzeugs von dem Ist-Rollwiderstand des Kraftfahrzeugs und gegebenenfalls zusätzlich eine direkte Messung der Interaktionskraft eines berührungsempfindlichen Sensors an einer Außenseite des Kraftfahrzeugs umfasst. Ein Aufeinandertreffen in diesem Sinne bezieht sich auf einen ungewollten Zusammenstoß zwischen Fahrzeug und Mensch, wie zum Beispiel eine Kollision. Der Kern der Erfindung beruht entsprechend mitunter auf einem Algorithmus, der in einer bekannten Recheneinheit des Fahrzeugs gespeichert und ausgeführt wird, wie zum Beispiel einem Motorsteuergerät oder einem Batteriemanagementsystem oder dergleichen. Der Soll-Rollwiderstand entspricht dabei dem berechneten Widerstand des Fahrzeugs gegen Rollen, der erfindunsgemäß unter Berücksichtigung der Fahrbahnneigung, der Fahrstrecke, der Fahrzeugkinematik und des Fahrzeuggewichts bestimmt wird. Diese Faktoren sind entweder bereits bekannt oder werden in das das Verfahren ausführende System eingegeben, können aber auch durch entsprechende Sensoren des Kraftfahrzeugs erfasst werden, wie beispielsweise Videosensoren, Neigungssensoren, etc.. Ferner wird der Ist-Rollwiderstand vorzugsweise unter Berücksichtigung des Antriebsmoments des Kraftfahrzeugs bestimmt und basiert auf der Normalkraft des Fahrzeugs unter Einbeziehung des Rollwiderstandskoeffizienten.

In einer bevorzugten Ausführung kann der eigensichere Modus oder Überwachungsmodus des Kraftfahrzeugs durch den Fahrer selbst aktiviert werden, unter anderem durch Betätigen einer entsprechenden Einrichtung in dem Kraftfahrzeug wie beispielsweise im Falle des Rückwärtseinparkens des Kraftfahrzeugs durch Einlegen des Rückwärtsgangs oder im Falle einer verlangsamten Fahrt durch Herabschalten in den 1. Gang bzw. durch Abbremsen auf eine vergleichbar geringe Fahrgeschwindigkeit. Alternativ dazu kann der Überwachungsmodus des Kraftfahrzeugs auch automatisch durch das fahrzeugeigene Steuersystem aktiviert werden, beispielsweise durch Verzögern des Fahrzeugs bis zu einem Unterschreiten eines vorgegebenen Kraftfahrzeuggeschwindigkeitsschwellenwerts, der vorzugsweise bei 10 km/h, weiter vorzugsweise bei 8 km/h liegt. In diesem Fall wird eine Fahrt mit einer Fahrzeuggeschwindigkeit von weniger als 8 km/h als "langsame" Fahrt mit geringer Fahrgeschwindigkeit angesehen.

In einem weiteren bevorzugten Ausführungsbeispiel kann der Schritt des Begrenzens der Krafteinwirkung des Kraftfahrzeugs auf den Menschen durch Steuern des Kraftfahrzeugs entgegen der erfassten Interaktionskraft eine gezielte Geschwindigkeitskontrolle des Kraftfahrzeugs umfassen, vorzugsweise entweder mittels Beschleunigen des Kraftfahrzeugs, wie zum Beispiel einem Wegbeschleunigen des Fahrzeugs von dem potentiell interagierenden Menschen, oder mittels Verzögern des Kraftfahrzeugs, wie zum Beispiel einem Abbremsen des Fahrzeugs bei einer hingerichteten Bewegung auf den Menschen. Alternativ oder zusätzlich dazu ist es auch denkbar, eine automatische Lenkung des Fahrzeugs auszuführen, die eine entsprechende Wegbewegung von dem Menschen bzw. eine Verringerung des Aufpralls mit dem Menschen unterstützt. Als Beispiel beim Rückwärtseinparken des Fahrzeugs könnte man einen Rückwärtsaufprall des Fahrzeugs auf den Menschen mit einer Kombination aus Abbremsen und seitlichen Weglenken des Fahrzeugs von dem Menschen umsetzen. Als weiteres Beispiel ist es bei einem langsamen Abbiegen an einer Kreuzung denkbar, das Auto von einem auf die Straßenbahn tretenden Menschen durch Lenken und Antrieben weg zu beschleunigen.

Um eine entsprechende Erfassung eines Menschen in der Umgebung des Fahrzeugs umzusetzen beziehungsweise zu unterstützen, ist es in einer weiteren erfindungsgemäßen Ausführung denkbar, dass das Kraftfahrzeug an dessen Außenseite beziehungsweise an dessen Fahrzeugaußenhaut mit mindestens einem kapazitiven Ultraschall-, Video- oder Radar-Sensor versehen ist, der eben in der Lage ist, durch Feststellen der Veränderung seines Kapazitätsfelds ein Eindringen eines Passanten in die Umgebung des Sensors und damit in die Nähe des Fahrzeugs zu erfassen. Weiter vorzugsweise sind mehrere derartige Sensoren auf der Außenhaut des Kraftfahrzeugs vorgesehen, um ein lückenloses kapazitives Feld um die Fahrzeugaußenhaut zu legen, so dass bei Eindringen eines Menschen in das kapazitive Feld, also das nähere Umfeld des Fahrzeugs das Fahrzeug in den sicheren Zustand versetzt wird, das Fahrzeug in der Regel entsprechend zum Stillstand gebracht wird. Der Schritt des Aktivierens des Überwachungsmodus des Kraftfahrzeugs kann demnach ein Erfassen eines Menschen in dem Umfeld des Kraftfahrzeugs mittels des mindestens einen kapazitiven Sensors und ein Bestimmen der dadurch eventuell bedingten Notwendigkeit des Überwachungsmodus des Kraftfahrzeugs umfassen.

In einer weiteren bevorzugten Ausführung des erfindungsgemäßen Verfahrens sind während des Überwachungsmodus des Kraftfahrzeugs vorbestimmte Schutzmechanismen des Kraftfahrzeugs wirksam, die den in das Umfeld des Fahrzeugs eintretenden Menschen schützen. Als Beispiele für derartige Schutzmechanismen sind vorzugsweise ein Schutz des in das Fahrzeugumfeld eintretenden Menschen vor Überrollen und/oder Einklemmen durch das Kraftfahrzeug denkbar. Alternativ oder zusätzlich können auch noch weitere Schutzmechanismen vorgesehen sein, wie zum Beispiel die Ausgabe eines Warnsignals an den Menschen oder dergleichen.

Um eine wie vorhergehend erwähnte kooperative Möglichkeit des Umgangs mit dem Kraftfahrzeug durch einen in das Umfeld des Kraftfahrzeugs eintretenden Menschen zu bewerkstelligen, ist es weiterhin in einer weiteren bevorzugten Ausführung denkbar, dass das Kraftfahrzeug an dessen Außenseite mit mindestens einem berührungsempfindlichen Sensor versehen sein kann, beispielsweise einen berührungsempfindlichen Kraftsensor wie zum Beispiel einer Aktiv-Touch-Fläche oder einen berührungsempfindlichen optischen Sensor oder dergleichen. Dadurch kann eine Interaktionskraft des Kraftfahrzeugs mit dem Menschen, die beispielsweise durch einen unbeabsichtigten Aufprall zwischen dem Menschen und dem Kraftfahrzeug oder auch durch eine beabsichtigte Berührung des Kraftfahrzeugs durch den Menschen hervorgerufen wird, auf Basis einer Signalausgabe des berührungsempfindlichen Sensors erfasst werden und entsprechend in das erfindungsgemäße Verfahren eingegliedert werden, etwa in dem Schritt des Steuerns des Kraftfahrzeugs entgegen der erfassten Interaktionskraft. Dadurch wird es möglich, einem ungewollten Zusammentreffen zwischen Mensch und Kraftfahrzeug dadurch zu verhindern, dass der Mensch bei Erkennen des Zusammentreffens das Kraftfahrzeug entsprechend "wegdrückt", also die Berührung des Kraftfahrzeugs durch den Menschen zu einer aktiven Steuereingabe von außen durch den Menschen umgedeutet wird, was ein automatisches Lenken und/oder automatisches Beschleunigen/Verzögern des Kraftfahrzeugs weg von dem Menschen zur Folge haben kann. Die Haptik kann dabei durch Algorithmen und spezielle Steuerungsprotokolle variiert werden, so dass das Fahrzeug auf den "Bediener" federleicht, dynamisch oder aber auch schwerfällig reagiert und wirkt, je nach bedarf. Ein Kontrollieren des Kraftfahrzeugs durch einen außenstehenden Menschen wird dadurch ermöglicht, vorzugsweise nur in dem Fall eines potentiellen Zusammenstoßes zwischen Mensch und Fahrzeug. Das Kraftfahrzeug gemäß den vorhergehend beschriebenen Ausführungen ist weiter vorzugsweise ein Kraftfahrzeug mit elektrischem Antrieb, wie zum Beispiel ein Elektrofahrzeug oder ein Hybridfahrzeug.

### Kurze Beschreibung der Zeichnung

Eine bevorzugte Ausführungsform der Erfindung ist in der Zeichnung schematisch dargestellt und in der nachfolgenden genauen Beschreibung der bevorzugten Ausführungsform näher erläutert.

Es zeigt:

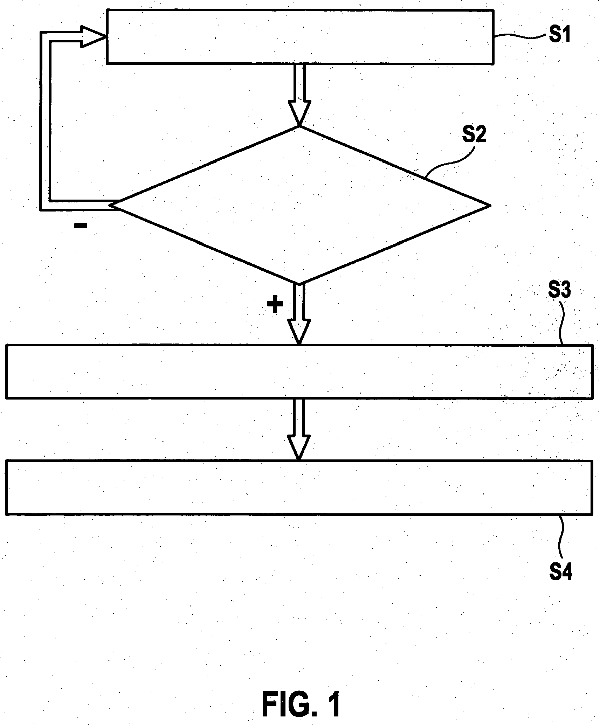

Fig. 1 ein Ablaufdiagramm eines erfindungsgemäßen Verfahrens gemäß der bevorzugten Ausführungsform.

### Bevorzugte Ausführungsform der Erfindung

Fig. 1 zeigt ein erfindungsgemäßes Verfahren gemäß einer bevorzugten Ausführungsform der Erfindung. Genauer gesagt zeigt Fig. 1 ein Verfahren zur Begrenzung der Krafteinwirkung eines Kraftfahrzeugs, vorzugsweise eines Elektro- oder Hybridfahrzeugs, auf Menschen beziehungsweise Passanten bei einem Aufeinandertreffen, wobei das Verfahren die Schritte S1 bis S4 aufweist. Schritt S1 umfasst dabei das Aktivieren des eigensicheren Zustands oder eigensicheren Modus des Kraftfahrzeugs, entweder manuell durch den Fahrer des Kraftfahrzeugs oder automatisch, beispielsweise durch das Steuersystem des Kraftfahrzeugs. Schritt S2 betrifft die Ermittlung einer Interaktion zwischen dem Kraftfahrzeug und dem Passanten durch eine Abfrage, ob eine Interaktion zwischen Passanten und Kraftfahrzeug stattfindet. Falls die Antwort auf Schritt S2 NEIN ist, geht das Verfahren zurück zu Schritt S1 und beginnt von vorne. Falls die Antwort auf Schritt S2 JA ist, geht das Verfahren über zu Schritt S3, bei dem die Interaktionskraft zwischen Passanten und Kraftfahrzeug, also Richtung und Betrag dieser Interaktionskraft erfasst wird, nämlich auf Basis eines Unterschieds zwischen berechneten Soll-Rollwiderstand und erfassten Ist-Rollwiderstand und vorzugsweise zusätzlich durch direkte Messung der Interaktionskraft eines berührungsempfindlichen Sensors an einer Außenseite des Kraftfahrzeugs. Bei der Berechnung des Soll-Rollwiderstands in Schritt S3 gehen dabei verschiedene Einflussgrößen ein, wie zum Beispiel Grad der Fahrbahnneigung, Länge der Fahrstrecke, weitere Größen der Fahrzeugkinematik wie unter anderem der Gierrate des Fahrzeugs etc., und das Fahrzeuggewicht. Der Ist-Rollwiderstand hingegen wird unter Berücksichtigung des Antriebsmoments des Kraftfahrzeugs, also des Antriebsmoments des Elektromotors des Kraftfahrzeugs bestimmt und beruht auf der resultierenden Normalkraft des Fahrzeugs unter Einbeziehung des Rollwiderstandskoeffizienten. Die Interaktionskraft zwischen Kraftfahrzeug und Passanten ergibt sich dabei direkt aus dem Unterschied zwischen Soll-Rollwiderstand und Ist-Rollwiderstand des Kraftfahrzeugs. Nach Schritt S3 geht das Verfahren auf Schritt S4 über, bei dem auf der Basis der Richtung und des Betrags der in Schritt S3 bestimmten Interaktionskraft das Kraftfahrzeug entsprechend entgegen gesteuert wird, also das Kraftfahrzeug, falls möglich, weg von dem Passanten gelenkt und entsprechend von diesem wegbeschleunigt oder aber eine Bewegung auf diesen hin verzögert wird. Dadurch kann ein potentieller Zusammenstoß zwischen dem Kraftfahrzeug und dem Passanten vermindert bzw. bis auf ein geringes Maß reduziert werden, so dass praktisch kein bemerkenswerter Zusammenstoß zwischen Passanten und Fahrzeug stattfindet. Es kann also davon ausgegangen werden, dass das Fahrzeug proaktiv einem Aufprall auf einen Passanten bei langsamer Fahrt entgegenwirkt und verhindert, dass sich dieser Aufprall zu einem den Passanten schädigenden Zusammenstoß entwickelt.

## Patentansprüche

1. Verfahren zur Begrenzung der Krafteinwirkung eines Kraftfahrzeugs auf Menschen bei einem Aufeinandertreffen, mit den folgenden Schritten:
Aktivieren eines Überwachungsmodüs des Kraftfahrzeugs (S1),
Ermitteln eines Aufeinandertreffens zwischen Kraftfahrzeug und Mensch (S2),
Erfassen einer Interaktionskraft des Kraftfahrzeugs mit einem Menschen außerhalb des Kraftfahrzeugs beim Aufeinandertreffen (S3), und
Begrenzen der Krafteinwirkung des Kraftfahrzeugs auf den Menschen durch Steuern des Kraftfahrzeugs entgegen der erfassten Interaktionskraft (S4),
wobei der Schritt des Erfassens der Interaktionskraft des Kraftfahrzeugs mit dem Menschen ein Bestimmen einer Abweichung des Soll-Rollwiderstands des Kraftfahrzeugs von dem Ist-Rollwiderstand des Kraftfahrzeugs umfasst, **dadurch gekennzeichnet, dass**
der Soll-Rollwiderstand des Kraftfahrzeugs unter Berücksichtigung der Fahrbahnneigung, der Fahrstrecke, der Fahrzeugkinematik und des Fahrzeuggewichts bestimmt wird.

2. Verfahren nach Anspruch 1, wobei der Schritt des Erfassens der Interaktionskraft des Kraftfahrzeugs mit dem Menschen zusätzlich eine direkte Messung der Interaktionskraft eines berührungsempfindlichen Sensors an einer Außenseite des Kraftfahrzeugs umfasst.

3. Verfahren nach einem der vorangehenden Ansprüche, wobei der Ist-Rollwiderstand unter Berücksichtigung des Antriebsmoments des Kraftfahrzeugs bestimmt wird.

4. Verfahren nach einem der vorangehenden Ansprüche, wobei der Überwachungsmodus des Kraftfahrzeugs durch den Fahrer aktiviert wird, oder wobei der Überwachungsmodus des Kraftfahrzeugs automatisch aktiviert wird, vorzugsweise durch Unterschreiten eines Kraftfahrzeuggeschwindigkeitsschwellenwerts von 8 km/h.

5. Verfahren nach einem der vorangehenden Ansprüche, wobei der Schritt des Begrenzens der Krafteinwirkung des Kraftfahrzeugs auf den Menschen durch Steuern des Kraftfahrzeugs entgegen der erfassten Interaktionskraft eine gezielte Kontrolle des Kraftfahrzeugs entweder mittels Beschleunigen des Kraftfahrzeugs oder mittels Verzögern des Kraftfahrzeugs umfasst.

6. Verfahren nach einem der vorangehenden Ansprüche, wobei das Kraftfahrzeug an dessen Außenseite, vorzugsweise an dessen Außenhaut, mit mindestens einem kapazitiven Sensor, einem Ultraschall-, Video- oder Radar-Sensor versehen ist, und wobei der Schritt des Aktivierens des Überwachungsmodus des Kraftfahrzeugs ein Erfassen eines Menschen in dem Umfeld des Kraftfahrzeugs mittels des mindestens einen kapazitiven Sensors, des Ultraschall-, Video- oder Radar-Sensors und ein Bestimmen der Notwendigkeit des Überwachungsmodus des Kraftfahrzeugs umfasst.

7. Verfahren nach einem der vorangehenden Ansprüche, wobei während des Überwachungsmodus des Kraftfahrzeugs Schutzmechanismen des Kraftfahrzeugs wirksam sind, die einen Schutz eines Menschen vor Überrollen oder Einklemmen durch das Kraftfahrzeug bewirken.

8. Verfahren nach einem der vorangehenden Ansprüche, wobei das Kraftfahrzeug an dessen Außenseite mit mindestens einem berührungsempfindlichen Sensor versehen ist, und wobei eine Interaktionskraft des Kraftfahrzeugs mit dem Menschen des Weiteren auf Basis einer Signalausgabe des berührungsempfindlichen Sensors erfasst wird.

9. Verfahren nach einem der vorangehenden Ansprüche, wobei das Kraftfahrzeug an dessen Außenseite mit mindestens einem berührungsempfindlichen Sensor versehen ist, und wobei das Steuern des Kraftfahrzeugs entgegen der erfassten Interaktionskraft auf Basis einer Signalausgabe des berührungsempfindlichen Sensors durchgeführt wird.

10. Verfahren nach einem der vorangehenden Ansprüche, wobei das Kraftfahrzeug ein Kraftfahrzeug mit elektrischem Antrieb ist.

## Claims

1. Method for limiting the force effect of a motor vehicle on persons in the case of a collision, having the following steps:
activating a monitoring mode of the motor vehicle (S1)
determining a collision between a motor vehicle and a person (S2),
sensing an interaction force of the motor vehicle with a person outside the motor vehicle when the collision occurs (S3), and
limiting the force effect of the motor vehicle on the person by controlling the motor vehicle counter to the sensed interaction force (S4),
wherein the step of sensing the interaction force of the motor vehicle with the person comprises determining a deviation of the setpoint rolling resistance of the motor vehicle from the actual rolling resistance of the motor vehicle, **characterized in that**
the setpoint rolling resistance of the motor vehicle is determined taking into account the inclination of the roadway, the route, the kinematics of the vehicle and the weight of the vehicle.

2. Method according to Claim 1, wherein the step of sensing the interaction force of the motor vehicle with the person additionally comprises directly measuring the interaction force of a touch-sensitive sensor on the outside of the motor vehicle.

3. Method according to one of the preceding claims, wherein the actual rolling resistance is determined by taking into account the driving torque of the motor vehicle.

4. Method according to one of the preceding claims, wherein the monitoring mode of the motor vehicle is actuated by the driver, or wherein the monitoring mode of the motor vehicle is actuated automatically, preferably as a result of a motor vehicle speed threshold value of 8 km/h being undershot.

5. Method according to one of the preceding claims, wherein the step of limiting the force effect of a motor vehicle on the person by controlling the motor vehicle counter to the sensed interaction force comprises selective control of the motor vehicle either by accelerating the motor vehicle of or by decelerating the motor vehicle.

6. Method according to one of the preceding claims, wherein the motor vehicle is provided on its outside, preferably on its outer skin, with at least one capacitive sensor such as an ultrasound sensor, video sensor or radar sensor, and wherein the step of activating the monitoring mode of the motor vehicle comprises sensing a person in the surroundings of the motor vehicle by means of the at least one capacitive sensor, the ultrasound sensor, video sensor or radar sensor, and determining the need for the monitoring mode of a motor vehicle.

7. Method according to one of the preceding claims, wherein during the monitoring mode of the motor vehicle protective mechanisms of the motor vehicle become active and bring about a protection of a person against rolling over or being trapped by the motor vehicle.

8. Method according to one of the preceding claims, wherein the motor vehicle is provided on its outside with at least one touch-sensitive sensor, and wherein an interaction force of the motor vehicle with the person is also sensed on the basis of the outputting of signals by the touch-sensitive sensor.

9. Method according to one of the preceding claims, wherein the motor vehicle is provided on its outside with at least one touch-sensitive sensor, and wherein the control of the motor vehicle is carried out counter to the sensed interaction force on the basis of the outputting of signals by the touch-sensitive sensor.

10. Method according to one of the preceding claims, wherein the motor vehicle is a motor vehicle with an electric drive.

## Revendications

1. Procédé destiné à limiter l'effet de force d'un véhicule automobile sur des personnes lors d'une rencontre, avec les étapes suivantes :
activation d'un mode de surveillance du véhicule automobile (S1),
détermination d'une rencontre entre le véhicule automobile et une personne (S2),
saisie d'une force d'interaction du véhicule automobile avec une personne en dehors du véhicule lors d'une rencontre (S3), et
limitation de l'effet de force du véhicule automobile sur la personne par la commande du véhicule automobile à l'encontre de la force d'interaction saisie (S4),
l'étape de la saisie de la force d'interaction du véhicule automobile avec la personne comprenant une détermination d'un écart de la résistance au roulement théorique du véhicule automobile par rapport à la résistance au roulement réelle du véhicule automobile, **caractérisé en ce que**
la résistance au roulement théorique du véhicule automobile est déterminée en prenant en considération l'inclinaison de la chaussée, le parcours, la cinématique du véhicule et le poids du véhicule.

2. Procédé selon la revendication 1, l'étape de saisie de la force d'interaction du véhicule automobile avec l'homme comprenant en plus une mesure directe de la force d'interaction d'un capteur tactile sur un côté extérieur du véhicule automobile.

3. Procédé selon l'une quelconque des revendications précédentes, la résistance au roulement réelle étant déterminée en prenant en considération le couple d'entraînement du véhicule automobile.

4. Procédé selon l'une quelconque des revendications précédentes, le mode de surveillance du véhicule automobile étant activé par le conducteur ou le mode de surveillance du véhicule automobile étant activé automatiquement, de préférence par le dépassement inférieur d'une valeur seuil de vitesse du véhicule automobile de 8 km/h.

5. Procédé selon l'une quelconque des revendications précédentes, l'étape de limitation de l'effet de force du véhicule automobile sur la personne par la commande du véhicule automobile à l'encontre de la force d'interaction saisie comprenant un contrôle envisagé du véhicule automobile soit au moyen de l'accélération du véhicule automobile, soit au moyen de la décélération du véhicule automobile.

6. Procédé selon l'une quelconque des revendications précédentes, le véhicule automobile étant doté sur son côté extérieur, de préférence sur son enveloppe extérieure, d'au moins un capteur capacitif, un capteur à ultrasons, à vidéo ou à radar et l'étape de l'activation du mode de surveillance du véhicule automobile comprenant une saisie d'une personne dans le champ périphérique du véhicule automobile au moyen d'au moins un capteur capacitif, du capteur à ultrasons, à vidéo ou à radar et une détermination de la nécessité du mode de surveillance du véhicule automobile.

7. Procédé selon l'une quelconque des revendications précédentes, des mécanismes de protection du véhicule automobile étant activés pendant le mode de surveillance du véhicule automobile, qui mettent en oeuvre une protection d'une personne visant à éviter l'écrasement ou le coincement par le véhicule automobile.

8. Procédé selon l'une quelconque des revendications précédentes, le véhicule automobile étant doté sur son côté extérieur d'au moins un capteur tactile et une force d'interaction du véhicule automobile avec la personne étant en plus saisie sur la base d'une émission de signaux du capteur tactile.

9. Procédé selon l'une quelconque des revendications précédentes, le véhicule automobile étant doté sur son côté extérieur d'au moins un capteur tactile et la commande du véhicule automobile à l'encontre de la force d'interaction saisie étant exécutée sur la base d'une émission de signaux du capteur tactile.

10. Procédé selon l'une quelconque des revendications précédentes, le véhicule automobile étant un véhicule à automobile à entraînement électrique.
